# EUROPÄISCHE PATENTSCHRIFT

(11) **EP 2 467 686 B1**
(45) Veröffentlichungstag und Bekanntmachung des Hinweises auf die Patenterteilung: **15.05.2013**
(21) Anmeldenummer: 09781974.2
(22) Anmeldetag: 19.08.2009
(51) Int. Cl.: G01J 5/00, G01J 5/04, H02K 11/00

(54) **ANORDNUNG MIT EINER ELEKTRISCHEN MASCHINE SOWIE VERFAHREN ZUM BETREIBEN EINER ELEKTRISCHEN MASCHINE**
ARRANGEMENT HAVING AN ELECTRIC MACHINE AND METHOD FOR OPERATING AN ELECTRIC MACHINE
SYSTÈME PRÉSENTANT UNE MACHINE ÉLECTRIQUE ET PROCÉDÉ PERMETTANT DE FAIRE FONCTIONNER UNE MACHINE ÉLECTRIQUE

(43) Veröffentlichungstag der Anmeldung: 27.06.2012
(73) Patentinhaber: Siemens Aktiengesellschaft, 80333 München (DE)
(72) Erfinder: ZETTNER, Jürgen, 90587 Veitsbronn (DE)
(86) Internationale Anmeldenummer: PCT/EP2009/060701
(87) Internationale Veröffentlichungsnummer: WO 2011/020500

(56) Entgegenhaltungen:
- JP-A- 55 099 033
- JP-A- 2004 116 316
- US-A1- 2002 163 278

## Beschreibung

Die Erfindung betrifft eine Anordnung mit einer elektrischen Maschine gemäß dem Oberbegriff des Patentanspruchs 1, und ein Verfahren zum Betrieb einer elektrischen Maschine gemäß Patentanspruch 9.

In Geräten mit komplizierten Einbauverhältnissen und rauen Umgebungsbedingungen ist eine Temperaturmessung mittels Berührungsthermometern häufig nicht ohne weiteres möglich. Speziell bei elektrischen Maschinen, d.h. bei Elektromotoren und Generatoren, stellt die Temperaturmessung an rotierenden Teilen in der Praxis ein Problem dar. So ist beispielsweise eine Temperaturüberwachung des Läufers, d.h. Rotors, von Elektromotoren und Generatoren wünschenswert, da eine solche Überwachung Aussagen über den Betriebszustand der elektrischen Maschine erlaubt und eine Optimierung der Auslegung der Leistungsklasse des Elektromotors ermöglicht. Hierdurch kann insbesondere eine Überdimensionierung des Motors vermieden werden, die oft vorgenommen wird, um u.a. eine Überhitzung von Permanentmagneten, die bei Überschreiten einer Grenztemperatur entmagnetisieren, zu verhindern. Darüber hinaus kann eine Temperaturüberwachung auch für die Steuerung des Motors verwendet werden, wodurch eine optimale Nutzung, d.h. ein besonders ökonomischer oder leistungsorientierter Betrieb, ermöglicht wird.

Aus der internationalen Patentanmeldung mit dem Anmeldeaktenzeichen PCT/EP2008/006077 ist bereits eine Anordnung zur Erfassung der Temperatur eines Rotors einer elektrischen Maschine bekannt, wobei der Stator der elektrischen Maschine eine radiale oder zumindest eine im Wesentlichen radiale (also senkrecht zur Drehachse des Rotors verlaufende) Öffnung aufweist, durch die mittels eines Pyrometers berührungslos die Temperatur des Rotors erfasst werden kann. Dabei ist es bekannt, in der äußeren Mantelfläche der elektrischen Maschine, also des Stators, einen Infrarot-Temperatursensor mit einer vorgeschalteten Optik, beispielsweise einem Linsensystem, vorzusehen, wodurch die Wärmeabstrahlung des Rotors und somit dessen Oberflächentemperatur erfasst werden kann.

Diese Anordnung weist den Nachteil auf, dass eine radiale Öffnung ("Bohrung") im Stator einer elektrischen Maschine wegen der dort untergebrachten Wicklungen und insbesondere bei kompakten elektrischen Maschinen nur schwer zu realisieren ist bzw. aus konstruktiven Gründen an vielen Stellen und oft sogar völlig unmöglich ist. Außerdem wird wegen des Abstandes zwischen dem außen liegenden Infrarot-Temperatursensor zur Oberfläche des Rotors die erwähnte Optik, also das Linsensystem, benötigt, was die Kosten für die Anordnung erhöht. Schließlich kann sich der für die Temperaturerfassung vorgesehene "Kanal", also die im Wesentlichen radiale Öffnung im Stator der elektrischen Maschine, im Laufe der Zeit mit Schmutzpartikeln zusetzen, so dass eine Temperaturerfassung verfälscht oder sogar unmöglich wird.

Ein weiteres Problem stellen Reflektionen insbesondere im Inneren des Kanals sowie Abstrahlungen aufgrund der Eigenwärme des Stators in diesem Bereich dar, wodurch weiterhin Messungen verfälscht werden können. Während insbesondere größere elektrische Maschinen in einigen Fällen über Kühlluftbohrungen verfügen, die in geeigneter Weise radial zum Rotor ausgeführt sind, sind insbesondere bei mittleren und kleineren elektrischen Maschinen solche Bohrungen nicht üblich oder aus Platzgründen überhaupt nicht realisierbar.

Die Druckschrift JP 2004 116316 A - Toru "Vacuum Pump" zeigt die Temperaturmessung an einem Rotor einer elektrischen Maschine, wobei statorseitig die vom Rotor emittierte Infrarotstrahlung mittels einer optischen Faser erfasst und axial aus dem Stator herausgeführt und zu einem außerhalb des Luftspalts der Maschine angeordneten Infrarot-Sensor geleitet wird.

Die Druckschrift JP 55 099033A - Kazuhiko "Measuring Device for Temperature" zeigt ebenfalls die Ausleitung von Infrarotstrahlung aus dem inneren einer elektrischen Maschine zu einem außen liegenden Infrarotsensor zum Zwecke einer Erfassung der Rotortemperatur.

Aus der Veröffentlichung US 2002/0163278 - Gauthier et al. "Rotary Electric Machine Having a Stator Made Up of Sectors Assembled Together" sind in den Statorwicklungen einer elektrischen Maschine angeordnete Temperatursensoren zur Überwachung der dortigen Wicklungstemperaturen bekannt.

Es ist also eine Aufgabe der vorliegenden Erfindung, eine Anordnung zur einfachen, zuverlässigen und kostengünstigen Temperaturerfassung für die rotierenden Teile einer elektrischen Maschine anzugeben. Es ist weiterhin eine Aufgabe der vorliegenden Erfindung, ein Verfahren für den Betrieb einer elekrischen Maschine anzugeben, bei dem die thermische Überlastung des Rotors zuverlässig vermieden wird.

Die Aufgabe wird durch eine Anordnung gemäß dem Patentanspruch 1 und durch ein Verfahren gemäß dem Patentanspruch 9 gelöst.

Es ist ein wesentlicher Aspekt der vorliegenden Erfindung, zur Erfassung der Temperatur eines Rotors einer elektrischen Maschine eine sog. Thermosäule, im Stand der Technik auch häufig als "Thermopile" bezeichnet, vorzusehen, die in einer Nut des Stators der elektrischen Maschine angeordnet ist und die zur berührungslosen Erfassung der Rotortemperatur eingerichtet ist. Eine Thermopile ist dabei eine Verschaltung (meist in Form einer Säule oder eines Schichtsystems) mit (meist) mehreren Thermoelementen, die mittels des Seebeck-Effektes in Abhängigkeit von einer aufgefangenen Wärmestrahlung und einer Substrat- oder Vergleichsstellentemperatur (die meist auch separat erfasst werden kann) eine Thermospannung erzeugt, die wiederum für eine Temperaturmessung auswertbar ist.

Die Lösung der Aufgabe sieht insbesondere eine Anordnung mit einer elektrischen Maschine vor, die einen Stator und einen Rotor umfasst, sowie mit einem Infrarot-Temperatursensor, wobei das Detektionsfeld des Infrarot-Temperatursensors auf eine Mantelfläche des Rotors ausgerichtet ist, und wobei der Infrarot-Temperatursensor eine Thermosäule zur Erfassung einer Temperatur des Rotors ist, die in einer Nut des Stators angeordnet ist. Durch den geringen Abstand zwischen der Nut im Stator und somit dem Temperatursensor bzw. der Thermosäule und dem Rotor kann auf eine aufwendige Optik für den Temperatursensor verzichtet werden. Weiterhin können somit die Anschlussleitungen (Signalleitungen) des Temperatursensors in der Nut des Stators, beispielsweise in Rillen der oberen Wicklungsschicht, verlegt werden. Durch die geringen Abstände zwischen dem Thermosensor und der Oberfläche des Rotors kann oft eine exakte (manuelle) Ausrichtung oder Justage während der Montage (während des Einbringens) entfallen. Weiterhin besitzt die erfindungsgemäße Anordnung den Vorteil, dass im engen Luftspalt mit durch den Rotor bewegter Luft, relativ wenig Verschmutzungen dauerhaft eindringen und sich auf dem Thermopile Eintrittsfenster ablagern können.

Die Lösung der Aufgabe sieht weiterhin eine Verfahren zum Betrieb einer elektrischen Maschine unter Verwendung einer erfindungsgemäßen Anordnung vor, wobei die Temperatur des Rotors zumindest einmalig, idealer Weise aber fortlaufend erfasst wird, wobei bei Erreichen oder Überschreiten einer Grenztemperatur die Leistung der elektrischen Maschine verringert wird bzw. der Betriebspunkt angepasst wird. Dadurch kann eine thermische Überlastung des Rotors, die unter anderem zu einer Entmagnetisierung von Permanentmagneten im Rotor führen kann, vermieden werden. Außerdem erübrigt sich so das Überdimensionieren von elektrischen Maschinen, weil die Gefahr einer Überhitzung durch Kontrolle der tatsächlichen Temperatur des Rotors nahezu ausgeschlossen werden kann. Eine Betriebsüberwachung des thermischen Zustandes einer elektrischen Maschine in neuartiger Weise wird ermöglich, derart, dass angepasste Leistungszustände realisierbar werden und durch optimal angpasste bewegte Massen gerade bei dynamischer Beanspruchung eine Effizienzsteigerung, d.h. eine Energieeinsparung, erzielt wird. Alternativ kann die Anordnung auch für Forschungszwecke an elektrischen Maschinen eingesetzt werden, wobei Inhomogenitäten der thermischen Belastung des Rotors erfasst werden können und Messdaten zur thermischen und elektrischen Auslegung von Maschinen gewonnen werden können.

Vorteilhafte Ausgestaltungen der erfindungsgemäßen Anordnung sind in den abhängigen Patentansprüchen angegeben. Die dabei erwähnten Merkmale und Vorteile gelten sinngemäß auch für das erfindungsgemäße Verfahren.

Es ist besonders vorteilhaft, den Infrarot-Temperatursensor und somit die Thermosäule in einen Nutenverschlusskeil einer Nut des Stators einer elektrischen Maschine zu integrieren. Dadurch erübrigt es sich, für den Thermosensor weiteren Bauraum konstruktiv vorzusehen. Insbesondere vergrößert sich der Gesamt-Durchmesser der elektrischen Maschine dadurch nicht bzw. nur unwesentlich. Ein weiterer Vorteil besteht darin, dass die Anschlussleitungen des Infrarot-Temperatursensors im Bauraum zwischen der Stator-Wicklung und dem Nutverschlusskeil axial aus dem Stator herausgeführt werden können. Dabei ist es besonders vorteilhaft, wenn die den Thermosäulen eigene Eigentemperatur-Messung (auch "Vergleichsstellen-Messung" genannt) gleichzeitig zur Erfassung der (lokalen) Temperatur des Stators bzw. der Stator-Wicklung der jeweils betrachteten Phase eingesetzt wird, wodurch für die Stator-Temperatur-erfassung bzw. für die Erfassung der Wicklungs-Temperatur keine zusätzliche Hardware erforderlich ist.

Eine Temperaturverteilung in Längsrichtung der elektrischen Maschine kann erfasst werden, wenn mehrere Infrarot-Temperatursensoren entlang der Längsachse der elektrischen Maschine eingesetzt werden oder zumindest einer der Infrarot-Temperatursensoren entlang der Längsachse der elektrischen Maschine verschiebbar ist. In den Fällen, in denen mehrere Temperatursensoren, also Thermosäulen, aufgrund ihrer Eigentemperatur-Erfassung auch zur Erfassung der Stator-Temperatur bzw. der Wicklungstemperatur derjenigen Wicklung eingesetzt werden, in deren Nut sie angeordnet sind, ist es vorteilhaft, die Temperatursensoren auf Nuten unterschiedlicher Phasen zu verteilen, so dass mehrere oder alle Phasen der elektrischen Maschine hinsichtlich ihrer Wicklungstemperaturen überwacht werden können. Weiters können durch die Integration in Standardbauteile (Nutenverschlusskeil) die Nuten am Umfang frei gewählt werden, ohne wesentlichen zusätzlichen Fertigungs/Montageaufwand zu erzeugen. Eine Einbringung in jede Nut entlang des Umfangs ist realisierbar. Bei der Erfassung der Stator- bzw. Wicklungstemperatur zur Überwachung dynamischer Betriebszustände ist es weiterhin von Vorteil, wenn die dem Stator bzw. der Wicklung zugewandte Seite der Thermosäule bzw. deren Oberfläche mit dem Sensor zur Eigentemperaturmessung (Kompensationsmessung) mittels eines Materials, welches eine gute Wärmeleitfähigkeit oder eine geringe thermische Dicke aufweist, mit dem Stator bzw. der Wicklung in Kontakt steht. Dies kann Wärmeleitpaste oder ein gut wärmeleitendes Polymer oder auch metallische Kopplung sein. Insbesondere in den Fällen, in denen die Thermosäule mittels einer Klebe-oder Vergussmasse in der Nut bzw. dem Nutverschlusskeil fixiert ist, kann dazu vorteilhaft ein Material mit guten Eigenschaften hinsichtlich des Wärmeübergangs , oder eine besonders flache Bauform, gewählt werden Alternativ kann aber auch z.B. bei Einbringung mittels Standard-Nutenverschlusskeilen aus elektrisch und thermisch hochisolierenden Kunststoffen eine möglichst hohe thermische Entkopplung zur Nut von Vorteil sein, um bei Nuttemperaturänderungen nur kleine, das eigentliche Messsignal verfälschende Driftsignale, durch auf dem Thermopile Chip entstehenden lokalen Wärmetransportvorgängen, hervorzurufen. Hier wird dann höhere Genauigkeit bei sich ändernden Betriebszuständen für das Rotortemperatursignal erzielt, allerdings einhergehend mit der Reduktion der Dynamik bei der Nut/Wicklungstemperaturerfassung.

Vorteilhaft ist die elektrische Maschine mit einem Drehwinkel-Geber oder einer anderen Einrichtung zur Drehwinkel-Erfassung ausgestattet, und die Messwerterfassung der Thermopiles wird durch ein davon abgeleitetes Signal bzw. einer Signalfolge getriggert, wodurch auch ein Temperaturprofil entlang einer Umfangslinie des Rotors erfasst werden kann. Dabei wird vorteilhaft bei der Erfassung des Temperaturprofils entweder die Drehzahl der elektrischen Maschine temporär so weit verringert, dass deren Drehfrequenz deutlich niedriger als die Grenzfrequenz der verwendeten Thermosäule bzw. verwendeten Thermosäulen ist, oder, sofern vorhanden, die zu verschiedenen elektrischen Phasen gehörigen Thermopiles so nacheinander geschaltet zum Drehwinkel aufgenommen, dass eine insgesamt höhere Zeit- bzw. Ortsauflösung erzielt werden kann (tastende Mittelung, Verschiebung des Zeitversatzes pro Umdrehung, LockIn-Verfahren). Dabei wird vorteilhaft während einer oder mehrer Umdrehungen des Rotors eine Vielzahl von Wertepaaren mit Drehwinkeln und der jeweils erfassten Temperatur erzeugt und ausgewertet. Vorteilhaft werden die dabei gewonnenen Temperaturprofile zur Auslegung anderer elektrischer Maschinen, zur Bestimmung des optimalen Betriebspunktes von elektrischen Maschinen und zur Betriebspunktanpassung, insbesondere hinsichtlich der Vermeidung von Übertemperaturen von Magnetmaterial, verwendet. Dieses Verfahren kann auch zur dauerhaften Überwachung einzelner Magnete im Betrieb einer elektrischen Maschine herangezogen werden, um somit Fertigungstoleranzen bzw. sich im Betrieb veränderte thermische Kopplungen einzelner Magnete feststellen zu können, da ein verringerter thermischer Kontakt zur Rotoraufnahme insbesondere bei sich ändernden Betriebslasten, also dynamischen Wärmeleitungsvorgängen, zu lokalen Überhitzungen führen kann. Somit wäre dadurch ein lokalisierendes Condition Monitoring Verfahren für hochwertige Maschinen gegeben, dadurch, dass einerseits verschiedene Phasen hinsichtlich ihrer Nut/Wicklungstemperatur, andererseits einzelne Magnete der Rotoren und zudem die Längenprofile der Temperaturverteilung des bewegten Rotors der Temperaturüberwachung zugänglich gemacht werden.

Eine besonders einfache Montage der Thermosäule ergibt sich, wenn dazu in einem Nutverschlusskeil bzw. in einem Bauteil, welches für einen Abschnitt der Nut die Funktion des Nutverschlusskeiles übernimmt, eine Sacklochbohrung oder eine geometrisch ähnliche Vertiefung eingebracht wird, welche ihre Öffnung seitens der Stator-Wicklung aufweist. In diese Sacklochbohrung kann vor Montage des Nutverschlusskeils bzw. des Bauteils die Thermosäule eingebracht werden, wobei zur Befestigung beispielsweise eine Verklebung oder eine Befestigungsklammer verwendet werden kann. Im Öffnungsbereich der Thermosäule ist in die Sacklochbohrung bzw. in die Vertiefung des Nutverschlusskeils bzw. des Bauteils vorteilhaft als Eintrittsöffnung für die Wärmestrahlung des zu erfassenden Bauteils (hier: des Rotors) eine Öffnung (Bohrung) vorzusehen, wobei der Durchmesser dieser Öffnung (Bohrung) den Erfassungswinkel für die berührungslose Temperaturerfassung bestimmt. Durch eine solche Konstruktion kann auf die Verwendung einer weiteren Optik verzichtet werden, zumal durch den beim Betrieb der elektrischen Maschine vorherrschenden Luftzug im Luftspalt etwaige vorhandene Schmutzpartikel in der Öffnung regelmäßig weg geblasen werden.

Ausführungsbeispiele der erfindungsgemäßen Anordnung werden nachfolgend anhand der Zeichnungen erläutert. Sie dienen gleichzeitig der Erläuterung eines erfindungsgemäßen Verfahrens.

Dabei zeigen:
- Figur 1: in einer schematischen Schnittdarstellung die Anordnung einer Thermosäule im Nutverschlusskeil einer elektrischen Maschine,
- Figur 2: die Befestigung der Thermosäule mittels einer Klammer, und
- Figur 3: schematisch den Querschnitt einer elektrischen Maschine mit drei Thermosäulen, die drei verschiedenen Nuten und Phasen des Stators zugeordnet sind.

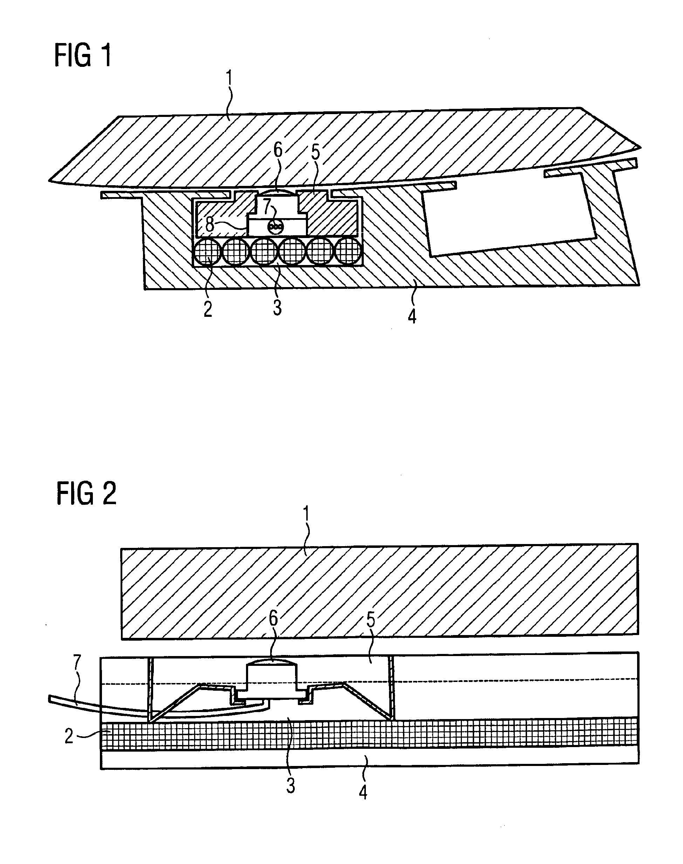

In der Figur 1 ist schematisch in einer Schnittdarstellung (Querschnitt) ein Ausschnitt einer elektrischen Maschine mit einem Rotor 1 und einem Stator 4 dargestellt. In dem Stator sind Nuten 3 eingelassen, in denen die Wicklung 2 des Stators 4 verläuft. Aus Gründen der Übersichtlichkeit ist in der Figur 1 nur eine Schicht mit sechs Windungen der Wicklung 2 dargestellt. In einem Nutverschlusskeil 5 der Nut 3 ist eine Sacklochbohrung 8 eingebracht, die vollständig von der Thermosäule 6 (Infrarot-Temperatursensor) ausgefüllt wird. Die Sacklochbohrung 8 weist seitens des Rotors 1 eine Durchbohrung auf, in welche die Detektionsseite der Thermosäule 6 hineinragt, wobei diese Seite der Thermosäule 6 auf dieser Seite aus einem transparenten Kunststoff besteht, der eine linsenartig ausgestaltete Oberfläche aufweist. Dadurch, dass die Durchbohrung einen geringeren Durchmesser als die Sacklochbohrung auf aufweist, ist die Sacklochbohrung 8 mit einem Tiefenanschlag versehen, welcher verhindert, dass die Thermosäule 6 in den Luftspalt zwischen Rotor 1 und Stator 4 hinein fallen kann. Seitens der Wicklung 2 stößt die Thermosäule 6 fest gegen die Wicklung 2, so dass auch eine Bewegung in Richtung des Stators nach der Montage der Anordnung aus Nutenverschlusskeil 5 und Thermosäule 6 nicht mehr erfolgen kann. Die Eigentemperaturmessung der Thermosäule 6 findet dabei an ihrem wicklungsseitigen Ende statt; zu diesem Zweck kann optional zwischen Wicklung 2 und der Unterseite der Thermosäule 6 eine Wärmeleitpaste o.ä. eingebracht werden. Optional zu der hier beschriebenen formschlüssigen Klemmung der Thermosäule 6 kann diese auch mit einem geeigneten Klebstoff oder einer geeigneten Vergussmasse fixiert werden.

In der Figur 2 ist eine Variante der Anordnung aus der Figur 1 dargestellt, wobei alle Bezugszeichen der Figuren 1, 2 und 3 jeweils denselben Gegenstand bezeichnen. In der Figur 2 ist die seitliche Aufsicht einer Ausführung der Anordnung der Thermosäule 6 in der Nut 3 dargestellt, wobei hierbei im Unterschied zur Figur 1 die Thermosäule 6 mittels eines Metallfeder-Rahmens fixiert ist. Diese Ausführungsform ist besonders einfach herzustellen, beispielsweise durch Tiefzieh-Formgebung von Federblechen, was insbesondere in der Massenherstellung kostengünstig ist. Der Federrahmen schließt in Längsrichtung die Nut 3 ab, d.h. dass der Federrahmen in die Nutengeometrie eingepasst ist und Löcher für die Kabelführung 7 und die Thermosäule 6 selbst aufweist. Durch die Federwirkung wird eine Klemmung bei gleichzeitiger einfacher Montagemöglichkeit verwirklicht. Dabei wird sowohl die Fixierung der Thermosäule 6 gegen die Oberseite der Nut 3, als auch eine weitgehende Verdrehsicherung gewährleistet. Optional kann diese Anordnung mittels einer Epoxidharz-Vergießung endgültig fixiert werden.

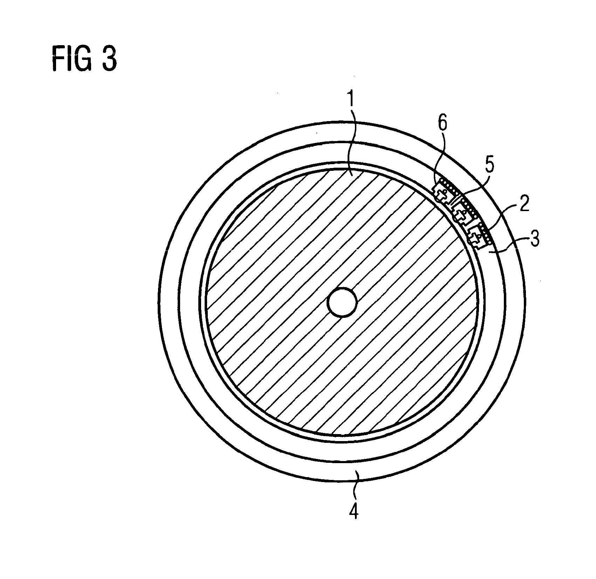

In der Figur 3 ist exemplarisch in einer Querschnitt-Ansicht eine dreifache Anordnung aus Thermosäulen 6 in Nutenverschlusskeilen 5 gezeigt, wobei die drei Thermosäulen 6 in drei zu verschiedenen elektrischen Phasen gehörenden Wicklungen angeordnet sind, um sowohl die Rotortemperatur, als auch jede einzelne Wicklungstemperatur überwachen zu können. Dies ist eine vorteilhafte Ausgestaltung, weil in jeder Phase der elektrischen Maschine unterschiedliche Verluste und damit unterschiedliche Temperaturen auftreten können. Durch eine derartige Anordnung können Fehler, insbesondere Symmetrie-Probleme, erkannt bzw. vermieden werden. In einer weiteren vorteilhaften Ausgestaltung dieser Variante mit mehreren Thermosäulen 6 können diese an unterschiedlichen Stellen bezogen auf die Längsachse der elektrischen Maschine angeordnet sein, so dass beispielsweise mit einer der Thermosäulen 6 die Rotortemperatur an einem Ende des Rotors 1 bzw. sogar an dessen Stirnseite gemessen werden kann, während mit einer oder mehreren der anderen Thermosäulen 6 die Manteltemperaturen in einem mittigen Bereich des Rotors 1 erfasst werden können.

Alternativ zu den in den Figuren dargestellten Abbildungen kann auch eine oder mehrere der Thermosäulen 6 verschiebbar in einer oder mehreren Nuten 3 angeordnet sein, beispielsweise mittels einer Rollenkonstruktion. Dies ermöglicht insbesondere bei experimentellen elektrischen Maschinen detaillierte Untersuchungen zur Wärmeverteilung.

## Patentansprüche

1. Anordnung mit einer elektrischen Maschine, die einen Stator (4) und einen Rotor (1) umfasst,
sowie mit einem Infrarot-Temperatursensor,
wobei das Detektionsfeld des Infrarot-Temperatursensors auf eine Mantelfläche des Rotors (1) ausgerichtet ist, **dadurch gekennzeichnet,**
**dass** der Infrarot-Temperatursensor eine Thermosäule (6) zur Erfassung einer Temperatur des Rotors (1) ist, die in einer Nut des Stators (4) zwischen einer in der Nut eingebrachten Wicklung und der rotorseitigen Öffnung der Nut in einem Nutverschlusskeil oder einem Bauteil, welches die Funktion eines Nutverschlussteils übernimmt, angeordnet ist.

2. Anordnung nach Patentanspruch 1,
**dadurch gekennzeichnet,**
**dass** die Thermosäule (6) in einem Nutverschlusskeil (5) der Nut des Stators (4) angeordnet ist.

3. Anordnung nach einem der vorherigen Patentansprüche,
**dadurch gekennzeichnet,**
**dass** eine Eigentemperatur-Messeinrichtung der Thermosäule (6) zur Temperatur-Erfassung des Stators (4) konfiguriert ist.

4. Anordnung nach einem der vorhergehenden Patentansprüche,
**dadurch gekennzeichnet,**
**dass** die Anordnung mehrere Thermosäulen (6) entlang der Längsachse der elektrischen Maschine aufweist.

5. Anordnung nach Patentanspruch 4,
**dadurch gekennzeichnet,**
**dass** die Thermosäulen (6) auf Nuten von zumindest zwei unterschiedlichen Phasen verteilt sind.

6. Anordnung nach einem der vorherigen Patentansprüche,
**dadurch gekennzeichnet,**
**dass** die elektrische Maschine eine Einrichtung zur Drehwinkel-Erfassung des Rotors (1) und diese eine Kopplung zur Temperaturerfassung aufweist, wobei eine Temperaturverteilung des Rotors (1) entlang seines Umfangs erfassbar ist.

7. Anordnung nach einem der Patentansprüche 2 bis 6,
**dadurch gekennzeichnet,**
**dass** die Thermosäule (6) in einer in axialer Richtung eingelassenen Sacklochbohrung (8) in dem Nutverschlusskeil (5) angeordnet ist, wobei die Sacklochbohrung (8) eine Durchbohrung in Richtung des Rotors (1) aufweist, und wobei die Durchbohrung einen geringeren Durchmesser als die Sacklochbohrung (8) aufweist.

8. Anordnung nach Patentanspruch 7,
**dadurch gekennzeichnet,**
**dass** die Durchbohrung als Blende zur Festlegung eines Erfassungswinkels für die Temperaturerfassung mittels der Thermosäule (6) ausgebildet ist.

9. Verfahren zum Betrieb einer elektrischen Maschine,
**dadurch gekennzeichnet,**
**dass** mit einer der Anordnungen gemäß der Patentansprüche 1 bis 8 zumindest eine Temperatur des Rotors (1) der elektrischen Maschine periodisch oder fortlaufend erfasst wird, wobei bei Erreichen oder Überschreiten einer festgelegten Grenztemperatur die Leistung der elektrischen Maschine verringert wird.

## Claims

1. Arrangement having an electrical machine which comprises a stator (4) and a rotor (1),
and also having an infrared temperature sensor,
with the detection field of the infrared temperature sensor being oriented onto a lateral surface of the rotor (1), **characterized**
**in that** the infrared temperature sensor is a thermopile (6) for detecting a temperature of the rotor (1), said thermopile being arranged in a slot in the stator (4) between a winding made in the slot and the opening at the rotor end of the slot, in a slot sealing wedge or a component which performs the function of a slot sealing wedge.

2. Arrangement according to Patent Claim 1,
**characterized**
**in that** the thermopile (6) is arranged in a slot sealing wedge (5) of the slot in the stator (4).

3. Arrangement according to either of the preceding claims,
**characterized**
**in that** an intrinsic temperature measuring device of the thermopile (6) is configured to detect the temperature of the stator (4).

4. Arrangement according to one of the preceding patent claims,
**characterized**
**in that** the arrangement has a plurality of thermopiles (6) along the longitudinal axis of the electrical machine.

5. Arrangement according to Patent Claim 4,
**characterized**
**in that** the thermopiles (6) are distributed over slots of at least two different phases.

6. Arrangement according to one of the preceding patent claims,
**characterized**
**in that** the electrical machine has a device for detecting the rotation angle of the rotor (1) and said device has a coupling for detecting the temperature, it being possible to detect a temperature distribution of the rotor (1) along the circumference of said rotor.

7. Arrangement according to one of Patent Claims 2 to 6,
**characterized**
**in that** the thermopile (6) is arranged in a blind hole (8), which is made in the axial direction, in the slot sealing wedge (5), with the blind hole (8) having a through-hole in the direction of the rotor (1), and with the through-hole having a smaller diameter than the blind hole (8).

8. Arrangement according to Patent Claim 7,
**characterized**
**in that** the through-hole is in the form of an aperture for defining a detection angle for the temperature detection by means of the thermopile (6).

9. Method for operating an electrical machine,
**characterized**
**in that** at least one temperature of the rotor (1) of the electrical machine is periodically or continuously detected by one of the arrangements according to Patent Claims 1 to 8, with the power of the electrical machine being reduced when a defined limit temperature is reached or exceeded.

## Revendications

1. Agencement ayant une machine électrique qui comprend un stator ( 4 ) et un rotor ( 1 ),
ainsi qu'un capteur de température infrarouge,
dans lequel le champ de détection du capteur de température infrarouge est dirigé sur une surface latérale du rotor ( 1 ),
**caractérisé**
**en ce que** le capteur de température infrarouge est une thermopile ( 6 ) de détection d'une température du rotor ( 1 ), qui est disposée, dans une encoche du stator ( 4 ), entre un enroulement introduit dans l'encoche et l'ouverture, du côté du rotor, de l'encoche dans une partie de fermeture de l'encoche ou dans un élément qui assume la fonction d'une partie de fermeture de l'encoche.

2. Agencement suivant la revendication 1,
**caractérisé**
**en ce que** la thermopile ( 6 ) est disposée dans un coin ( 5 ) de fermeture de l'encoche du stator ( 4 ).

3. Agencement suivant l'une des revendications précédentes,
**caractérisé en ce qu'**un dispositif de mesure de la température propre de la thermopile ( 6 ) est configurée pour détecter la température du stator ( 4 ).

4. Agencement suivant l'une des revendications précédentes,
**caractérisé en ce que** l'agencement a plusieurs thermopiles ( 6 ) le long de l'axe longitudinal de la machine électrique.

5. Agencement suivant la revendication 4,
**caractérisé en ce que** les thermopiles ( 6 ) sont réparties sur des encoches d'au moins deux phases différentes.

6. Agencement suivant l'une des revendications précédentes,
**caractérisé en ce que** la machine électrique a un dispositif de détection de l'angle de rotation du rotor ( 1 ) et celui-ci a un couplage pour la détection de température, une répartition de températures du rotor ( 1 ) le long de son pourtour pouvant être détectée.

7. Agencement suivant l'une des revendications 2 à 6,
**caractérisé en ce que** la thermopile ( 6 ) est disposée dans le coin ( 7 ) de fermeture de l'encoche dans un trou ( 8 ) borgne ménagé dans la direction axiale, le trou ( 8 ) borgne ayant un trou traversant en direction du rotor ( 1 ) et le trou traversant ayant un diamètre plus petit que le trou ( 8 ) borgne.

8. Agencement suivant la revendication 7,
**caractérisé**
**en ce que** le trou traversant est constitué sous la forme d'un diaphragme pour la fixation d'un angle de détection pour la détection de température au moyen de la thermopile ( 6 ).

9. Procédé pour faire fonctionner une machine électrique
**caractérisé**
**en ce que** l'on détecte périodiquement ou en continu au moins une température du rotor ( 1 ) de la machine électrique par l'un des agencements suivant les revendications 1 à 8, la puissance de la machine électrique étant diminuée lorsqu'une température limite fixée est atteinte ou est dépassée.
